# EUROPEAN PATENT APPLICATION

(11) **EP 3 991 545 A1**
(43) Date of publication of application: **04.05.2022**
(21) Application number: 20382938.7
(22) Date of filing: 28.10.2020
(51) Int. Cl.: A01F 29/00, B65B 69/00

(54) **REMOVAL DEVICE**

(71) Applicant: IMABE IBERICA, S.A., 28500 Arganda del Rey, Madrid (ES)
(72) Inventor: BENÍTEZ SALVADOR, Juan José, 28500 Arganda del Rey, Madrid (ES)
(74) Representative: ABG Intellectual Property Law, S.L.

(57) **Abstract**

The present invention relates to a removal device and a removal system for removing one or more segments of cord from a bale, as well as to a method for cutting one or more cords and removing one or more segments of cord from a bale.

## Description

### OBJECT OF THE INVENTION

The present invention relates to a removal device and a removal system for removing one or more segments of cord from a bale, as well as to a method for cutting one or more cords and removing one or more segments of cord from a bale.

### BACKGROUND OF THE INVENTION

Some plant products for animal consumption, such as straw, hay, or alfalfa, are baled by means of baler machines which press and tie the product by means of cords forming bundles or bales with a certain format and a certain density. The shape and size of said bales are maintained by the cords used for tying same.

However, these products baled into bundles or bales must be treated again at the industrial level to obtain higher densities, different sizes, and to improve the quality intended for livestock consumption at the destination.

In this sense, there is a need to undo the previously baled bundle to thereby configure a new product pack which forms a new, more compact bale. To that end, the cord or cords maintaining the original size of the first bale (or bundle) are removed, such that the product is released.

Currently available removal systems for removing these cords are highly complicated technically and constructively speaking.

Additionally, these removal systems for removing cords require the availability of a large space around the base machinery for the installation thereof in the suitable location, so they require extensive safety measures.

This results in a high economic impact on the machinery needed for making the bales, based on the space required by a single section of the machine as well as the mentioned safety measures for its proper operation.

At present, these cords are removed either manually or by means of automatic removal devices of another type.

In other cases, when undoing the original bundles to thereby configure new bales, the cords which have first been cut are not removed, these segments of cord thereby being mixed with the product. This entails a serious problem because the cord is compacted with the product and can therefore be ingested by the animals which feed directly from this finished product.

### DESCRIPTION OF THE INVENTION

The present invention proposes a solution to the preceding problems by means of a removal device and a removal system for removing segments of cord according to claims 1 and 6, and a cutting method for cutting and removing segments of cord according to claim 10. The dependent claims define preferred embodiments of the invention.

A first inventive aspect provides a *removal device coupleable to a machine for cutting bales, said removal device being configured for removing segments of cord from a bale, the removal device comprising:*
- *a support configured for being coupled to an inlet area of the machine for cutting bales, and*
- *at least one swiveling arm, comprising:*
   - *a first end and a second end, and*
   - *securing means,*
*wherein:*
- *the at least one swiveling arm is coupled to the support by means of the first end, and*
- *the securing means are coupled to the second end.*

Throughout this document, a machine for cutting bales will be understood to mean a set of modules which allows receiving the original bundle and undoing it, leaving the product free to configure a new bale.

Likewise, a bale or bundle is a conventional format for grouping a group of elements, plant products for animal consumption in the present invention, which are pressed and tied to form a block, and thereby making their transfer or storage easier. The shape and size of said bales are maintained as a result of the pressing to which they are subjected, and as a result of the cords used for tying said bale around the perimeter thereof. Therefore, after the corresponding cut, each of the cords around the bale will form a segment of cord.

The removal device for removing cords according to the first inventive aspect is therefore configured as a module coupleable to the machine for cutting bales or as an actual module of the machine for cutting bales, wherein the support of the removal device receives, from preceding modules of the machine for cutting bales, the original bale to be undone for releasing the product.

The support is therefore a structure, preferably a metallic structure, which allows both the coupling with the machine for cutting bales and the coupling of the at least one swiveling arm intended for removing the segments of cord.

In a particular embodiment, the support is a metallic sheet arranged perpendicular to the plane on which the bale to be undone is located, this plane being a horizontal plane.

The support is coupled to the machine for cutting bales by any attachment means such as a weld, bolts, or rivets, for example. Said coupling allows the position of the support to be stable enough for each swiveling arm, coupled through its first end to the support, to be suitably secured to act on the bale to be undone.

In a particular embodiment, the coupling between the first end of the swiveling arm and the support is by means of a threaded, welded, or riveted attachment.

Securing means for securing the segments of cord are located at the opposite end of the swiveling arm, i.e., the second end.

In a particular embodiment, the securing means are configured for adopting a first open position and a second closed position. That is, in the first open position, the securing means allow the segments of cord to enter and exit the space defined in said means for housing said segments of cord, said segments of cord therefore being released.

In contrast, the second closed position of the securing means prevents the segments of cord from being able to come off said securing means, which allows them to be removed from the bale through the swiveling arm.

Advantageously, the different positions of the securing means allow retaining the segments of cord such that, once extracted from the bale, they can be safely removed from the product to prevent being mixed with said product.

In a particular embodiment, said securing means can be configured as a hook or as a griper, which allows retaining the segments of cord.

In a particular embodiment, the securing means comprise actuation means, preferably a piston, for positioning the securing means in their first or second position.

Advantageously, these actuation means allow actuating the securing means independently of the swiveling arm.

Therefore, the actuation means allow changing the position of the securing means such that they are arranged in their first position for picking up or releasing the segments of cord of the bale, or in their second position for preventing said segments of cord from coming off and being mixed again with the product of the bale.

In a particular embodiment, the securing means also allow an additional regulation in the longitudinal direction of the swiveling arm, which allows said securing means to be oriented based on the thickness of the bale.

The first end of the swiveling arm in turn comprises a fixed element, particularly a rod acting as a shaft about which the swiveling arm can pivot to different positions.

In a particular embodiment, the swiveling arm is capable of pivoting to different positions, two of which are defined as a first position on the bale and a second position away from the bale.

That is, in a first position, the swiveling arm is located parallel and in a vertical position with respect to the support, therefore being located on the bale, supported on the horizontal plane, whereas in a second position, the swiveling arm is inclined, or even in a horizontal position with respect to the support, the second end of the swiveling arm and the securing means therefore being away from the bale.

Advantageously, this allows removing the segments of cord retained by the securing means from the bale, and therefore prevents said segments of cord from being mixed with the released product and compacted with this product in the new compacted bale elaborated by the machine.

In a particular embodiment, the swiveling arm is actuated by means of a hydraulic cylinder which allows it to pivot to the different defined positions.

This hydraulic cylinder is in turn fixed to the support at one end, while being coupled with the swiveling arm at the other end, to actuate it and allow its movement along the different positions of the swiveling arm.

Advantageously, an element such as the hydraulic cylinder allows actuating and controlling the movement of the swiveling arm.

In a particular embodiment, the movement of the swiveling arm is actuated by the hydraulic cylinder and directed by a guiding element, also fixed in the support, allowing a suitable tracking of the swiveling arm to be performed along the path needed for adopting the predetermined positions.

In a particular embodiment, the device also comprises a stop, coupled to the support, protecting the securing means in one of their end positions, particularly in their first position, when they are on the bale.

In a particular embodiment, the removal device, particularly the support, comprises storage means for storing removed segments of cord, preferably a hook, a protrusion, or a chamber.

A second inventive aspect provides a *removal system for removing segments of cord from a bale, comprising:*
- *a structure, comprising a support surface defined on a horizontal plane, configured for supporting a bale,*
- *cutting means located on the support surface, and*
- *a removal device according to the first inventive aspect, wherein said removal device is coupled to the structure.*

Throughout this document, it is understood that the system according to this second inventive aspect is configured as a station of the machine for cutting bales, comprising elements in addition to those provided by the removal device for removing segments of cord, defined according to the first inventive aspect.

That is, the structure is coupled with the removal device, particularly with the support, through a threaded, welded, or riveted attachment.

The support surface of the bale defined by the present structure which is contained in a horizontal plane, according to the direction of gravity, therefore corresponds with the horizontal plane on which the bale is located in the removal device according to the first inventive aspect.

In a particular embodiment, the support is perpendicular to the support surface of the structure, therefore being configured as a vertical support.

Additionally, this system comprises cutting means for cutting cords, located on the support surface.

Advantageously, this allows positioning the cutting means on the support surface in the path of the bale, positioning said cutting means at one or more predetermined points which allow making a cut on each cord around the perimeter of the bale, keeping it compact.

The cutting means therefore make a single cut on each cord around the bale, obtaining, from its perimetral configuration, a segment of cord for each of the cords, thereby releasing the product.

In a particular embodiment, the cutting means are made up of at least one blade, arranged on the support surface, and configured for sectioning at least one cord arranged around the perimeter of the bale into a segment of cord.

Therefore, one or more blades are arranged along the support surface such that, as the bale moves forward in its path on said support surface, the blade or blades make a single cut on each cord arranged around the perimeter of the bale.

In a particular embodiment, the support surface comprises movement means configured for moving the bale along said support surface.

These movement means are preferably longitudinal protrusions or grooves longitudinally machined along the support surface in the form of hollowed out areas housing a predetermined material, such as an elastomer. These movement means prevent the support surface and the product of the bale from brushing against one another completely, thereby making it easier for the bale to slide along the support surface.

In a particular embodiment, the movement means can also be a system of rollers making it easier for the bale to slide on the support surface, and therefore to progress longitudinally.

Additionally, the movement means also allow the cutting of the different cords, performed by the cutting means, to be more efficient, given that the bale moves smoothly along the support surface, sliding on said cutting means and benefitting the cut made.

In a particular embodiment, the system according to the second inventive aspect further comprises drive means, coupled to the structure, which allow the bale to be placed on the support surface.

The drive means, preferably a drive carriage, support the bale and/or position it, by means of a longitudinal and/or height-wise movement, at the inlet of the support surface, such that the bale is arranged at the point for starting its travel along said support surface.

The drive means additionally position and orient the bale in its most suitable position such that, in this way, the path along the support surface becomes suitable, and the bale is suitably positioned for the cutting means to cut each of the cords going around the bale.

A third inventive aspect provides a *cutting method for cutting at least one cord each into a segment of cord, and removing said segment of cord from the at least one cord by means of a removal system according to the second inventive aspect, the method comprising the steps of:*
*(a) providing a bale, comprising at least one cord arranged around the perimeter of the bale, on the support surface,*
*(b) cutting each cord into a segment of cord using the cutting means,*
*(c) collecting the segment of cord from each cord of the bale using the securing means, with said securing means being in the first open position,*
*(d) changing the position of the securing means from the first open position to the second closed position, and*
*(e) pivoting the at least one swiveling arm to a predetermined end position.*

The method according to the third inventive aspect therefore allows cutting each of the cords around the perimeter of the bale and maintaining its configuration, obtaining a segment of cord.

In a particular embodiment, the cutting means of the system according to the second inventive aspect make a single cut on each cord.

Additionally, the method according to the third inventive aspect allows removing each of the segments of cord obtained after the cut, extracting them from the bale and preventing them from being mixed with the product released from the bale.

To that end, the removal device according to the first inventive aspect gathers the different segments of cord in the securing means in the open position thereof, preventing their subsequent falling or loss by changing the position of the securing means to their closed position and pivoting the swiveling arm to thereby completely extract the segments of cord from the bale, thus separating the segments from the product to be compacted.

In a particular embodiment, the predetermined end position of step (e) is the second position away from the bale of the at least one swiveling arm.

Advantageously, this allows completely removing the segments of cord from the bale, in turn preventing any of the segments of cord from being mixed with the product of the bale.

In a particular embodiment, the segments of cord are stored in storage means present in the support of the removal device.

In a particular embodiment, prior to step (a) the bale comprising one or more cords arranged around the perimeter of the bale is provided on the drive means.

In a particular embodiment, step (a) further comprises positioning the bale in a specific position on the cutting means.

Advantageously, the drive means allow positioning the bale in the most suitable position so that it can thereby start its travel on the support surface.

The drive means exert a force on the bale through the movement thereof in the longitudinal direction (the forward movement direction of the bale along the support surface) and in the transverse direction (the direction perpendicular to said forward movement direction, parallel to the direction of gravity), allowing the bale to be positioned in the inlet of the support surface and the cords to be positioned in their correct position for passage through the cutting means.

In a particular embodiment, the method according to the third inventive aspect further comprises step (f) of actuating the actuation means for positioning the securing means in their first position.

Once the swiveling arm has been removed from its position on the bale and is in its second position away from the bale, the segments of cord can be released from the securing means.

In a particular embodiment, the method according to the third inventive aspect further comprises step (g) of releasing all the removed segments of cord while the swiveling arm returns to its initial position from its predetermined end position.

In a particular embodiment, the segments of cord come off the securing means in their first open position when the swiveling arm has initiated the movement to its first position on the bale.

All the features and/or method steps described in this specification (including the claims, description, and drawings) can be combined in any combination, with the exception of combinations of such mutually exclusive features.

### DESCRIPTION OF THE DRAWINGS

These and other features and advantages of the invention will become more apparent from the following detailed description of a preferred embodiment, given only by way of non-limiting illustrative example in reference to the attached figures.
- Figure 1: This figure shows a perspective view of a first embodiment of a removal device for removing segments of cord.
- Figure 2: This figure shows a detail of the embodiment of a removal device for removing segments of cord of Figure 1.
- Figure 3A: This figure shows a detail of the embodiment of a removal device for removing segments of cord of Figure 1, with the securing means in a first position.
- Figure 3B: This figure shows a detail of the embodiment of a removal device for removing segments of cord of Figure 1, with the securing means in a second position.
- Figure 4: This figure shows a perspective view of a first embodiment of a removal system for removing segments of cord, comprising the removal device of the Figures 1 and 2.
- Figure 5: This figure shows another view of the removal system for removing segments of cord of Figure 3.
- Figure 6: This figure shows an embodiment of an arrangement of a machine for cutting bales together with a removal system for removing segments of cord according to Figures 3 and 4.

### DETAILED DESCRIPTION OF THE INVENTION

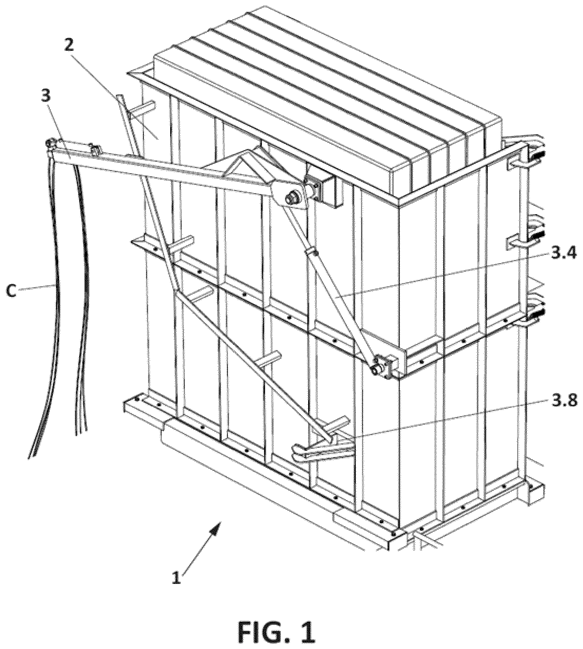

Figure 1 depicts a perspective view of an embodiment of a removal device (1) for removing segments of cord (C).

This device (1) comprises a metallic support (2) arranged as a vertical wall (according to the orientation of the figure), on which the swiveling arm (3) has been fixed.

In particular, the way in which the first end (3.1) of the swiveling arm (3) is fixed through a threaded attachment can be seen, with a pin (3.9), about which the swiveling arm (3) pivots, in turn emerging therefrom.

Securing means (3.3) are arranged at the opposite end, i.e., the second end (3.2), of the swiveling arm (3).

Moreover, the hydraulic cylinder (3.4) which actuates the swiveling arm (3) so that it moves between the predetermined positions is also seen, said positions being:
- a first position in which the swiveling arm (3) is in a vertical position (according to the orientation of the figure), the securing means (3.3) being located directly on the bale, and
- a second position, shown in the present figure, in which the swiveling arm (3) is almost in a horizontal position (according to the orientation of the figure), the securing means (3.3), and therefore the segments of cord (C), being located away from the bale.

Therefore, as seen in the present Figure 1, the segments of cord (C) are extracted through one of the sides of the device (1), without risk of being mixed with the product released from the bale.

Figure 1 also shows a stop (3.8) determining, with the end-of-stroke position of the hydraulic cylinder (3.4), the end of travel of the swiveling arm (3), and therefore the first position of said swiveling arm (3).

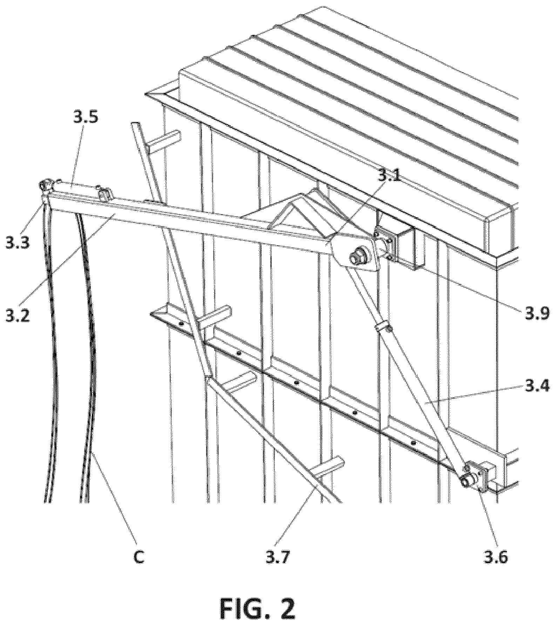

Figure 2 shows a detail of the components of the swiveling arm (3), the latter being located in the same position as in Figure 1.

The coupling of the swiveling arm (3) to the support (2) through a threaded attachment located at its first end (3.1), with support plates and bolts, as well as the coupling of the hydraulic cylinder (3.4) also to the support (2) with a threaded attachment (3.6) similar to that of the first end (3.1) of the swiveling arm (3), is therefore observed.

Figure 2 also shows a guiding element (3.7) along which the swiveling arm (3) slides as it moves between the first and second positions, and vice versa.

This guiding element (3.7) is configured by two metallic elements defining the path of the swiveling arm (3), supporting and allowing a smooth movement.

The second end (3.2) of the swiveling arm (3), in which the securing means (3.3) retaining, in the present position, the segments of cord (C) to be removed from the bale, are located, is shown at the opposite end, on the left side of the present figure.

The piston (3.5) which allows actuating the securing means (3.3), changing their position between the first open position or the second closed position, is also located at this second end (3.2) of the swiveling arm (3). In the present figure, the securing means (3.3) are shown in their second closed position, thereby retaining the segments of cord (C).

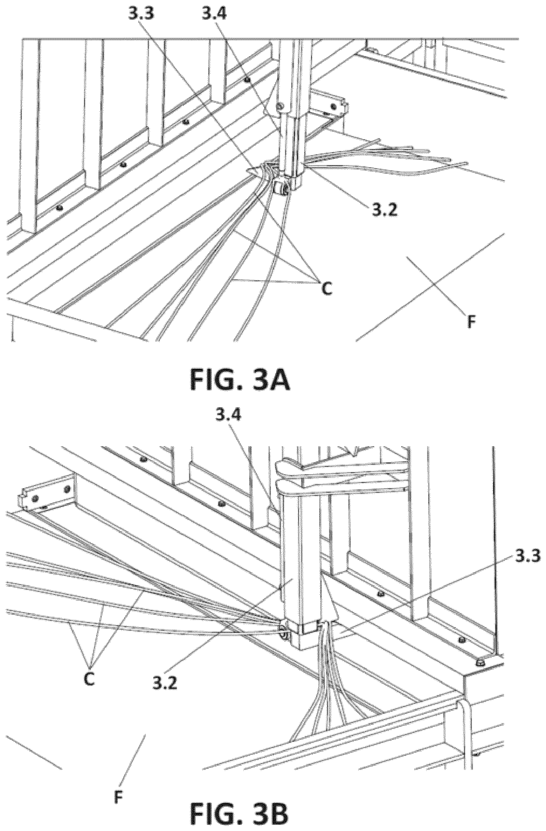

As can be seen, Figure 3A is a particular detail of the securing means (3.3) when they are in their first position in which they are open with respect to the segments of cord (C), whereas Figure 3B depicts a particular detail of these same securing means (3.3) when they are in their second position in which they are closed with respect to the segments of cord (C).

The way in which the securing means (3.3), located at the second end (3.2) of the swiveling arm (3), and actuated by the actuation means (3.4), are positioned in relation to the segments of cord (C), can thus be seen in detail.

The way in which the securing means (3.3) press said segments of cord (C) between two surfaces can be seen in Figure 3B, whereas in Figure 3A these same surfaces are separated from one another, leaving the segments of cord (C) free.

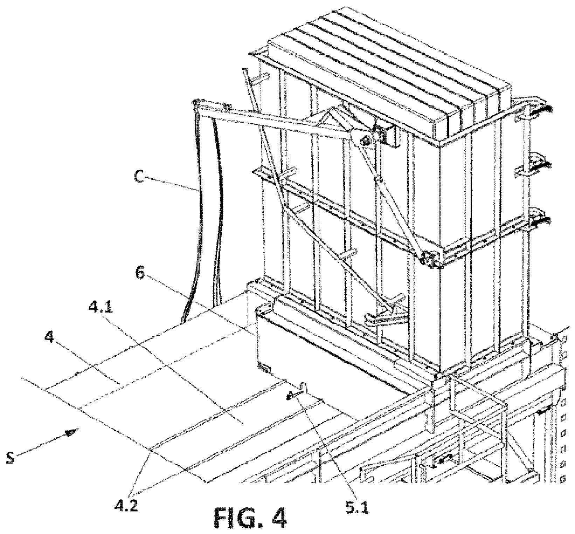

Figure 4 shows a perspective view of a removal system (S) for removing segments of cord (C) with the removal device (1) for removing segments of cord (C) of Figures 1 and 2 coupled to a structure (4) of said system (S).

As can be seen, the device (1) is coupled to the structure (4) through its support (2), and by means of threaded attachments, said support (2) being in a vertical position (according to the orientation of the figure).

Figure 4 also shows, in the inner part of the structure (4), the support surface (4.1) defined on a horizontal plane (X-X'), said horizontal plane being perpendicular to the support (2).

The support surface (4.1) has, located in the longitudinal direction and along the space of said support surface (4.1), rails (4.2) or grooves on which the bale (F) slides to travel the distance defined by the support surface (4.1). These rails are steel rods or elastomeric blocks favoring the sliding of the bale (F) on the support surface (4.1), greatly reducing friction.

Additionally, Figure 4 also shows the drive carriage (6) which allows, by means of a drive force exerted on the bale (F) in the direction of the support surface (4.1), said bale (F) to travel the distance of the support surface (4.1).

As can be seen, a blade (5.1) is located on the support surface (4.1) in a predetermined position for cutting the cords (C) of the bale (F).

The drive carriage (6) in turn comprises an opening which the blade (5.1) goes through when said carriage (6) drives the bale (F) along its path to prevent damaging the blade (5.1) or blocking said path.

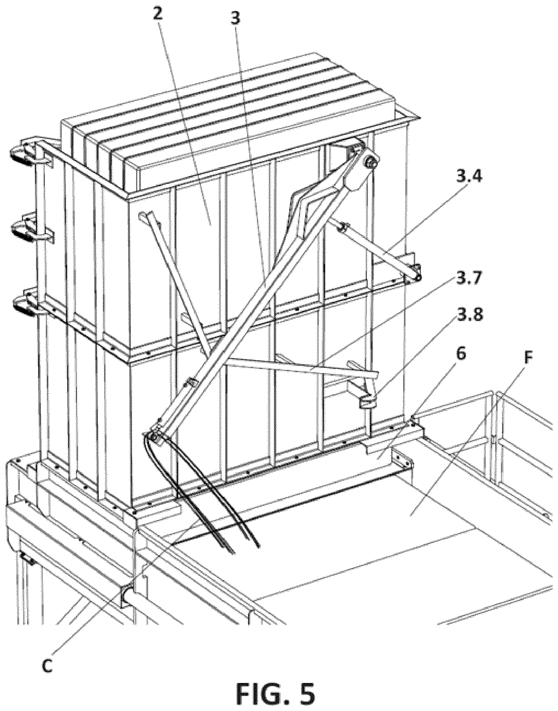

Figure 5 shows the same system (S) present in Figure 3, from the opposite side.

The way in which the swiveling arm (3) is directed towards its second position, away from the bale (F), pulling with it the segments of cord (C) which are being removed from the bale (F), can be seen in this figure.

This second position of the swiveling arm (3) is defined by means of the hydraulic cylinder (3.4) and the guiding element (3.7) directing the path of said arm (3) and therefore of the segments of cord (C).

The way in which the segments of cord (C) which have been removed are gathered outside said system (S), while the next bale (F), loaded on the drive carriage (6) from the rear part of the structure (4) and the support (2), moves forward as it travels on the support surface (4.1) to proceed with the cutting and removal of the different cords (C), can thus be seen.

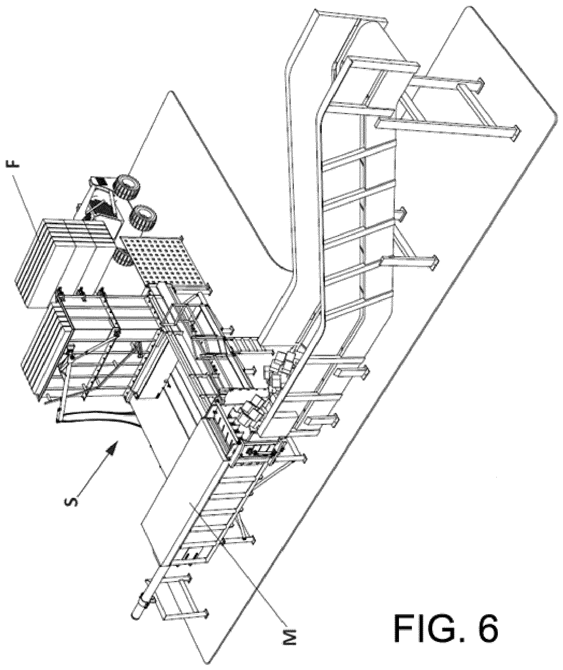

Finally, Figure 6 shows a complete arrangement of the machines for baling and cutting bales (F).

In particular, the figure shows a bale (F) being conveyed to the system (S) for cutting and removing segments of cords (C) and being introduced into said system (S) until, after the cutting of the cords (C) and the removal of these segments by means of the device (1), the product released from the bale (F) reaches the machine (M) for cutting bales, in which the product is grouped again into smaller portions ready to be compacted once again.

## Claims

1. A removal device (1) coupleable to a machine for cutting bales (F), said removal device (1) being configured for removing segments of cord (C) from a bale (F), the removal device (1) comprising:
- a support (2) configured for being coupled to an inlet area of the machine for cutting bales (F), and
- at least one swiveling arm (3) comprising:
- a first end (3.1) and a second end (3.2), and
- securing means (3.3),
wherein:
- the at least one swiveling arm (3) is coupled to the support (2) by means of the first end (3.1), and
- the securing means (3.3) are coupled to the second end (3.2).

2. The removal device (1) according to the preceding claim, wherein the at least one swiveling arm (3) is actuated by means of a hydraulic cylinder (3.4).

3. The removal device (1) according to any of the preceding claims, wherein the at least one swiveling arm (3) is configured for swiveling between a first position on the bale (F) and a second position away from the bale (F).

4. The removal device (1) according to any of the preceding claims, wherein the securing means (3.3) are configured for adopting a first open position and a second closed position.

5. The removal device (1) according to the preceding claim, wherein the securing means (3.3) comprise actuation means (3.4) for positioning the securing means (3.3) in their first or second position.

6. A removal system (S) for removing segments of cord (C) from a bale (F), comprising:
- a structure (4), comprising a support surface (4.1) defined on a horizontal plane (X-X'), configured for supporting a bale (F),
- cutting means (5) located on the support surface (4.1), and
- a removal device (1) according to any of claims 1 to 5,
wherein the removal device (1) is coupled to the structure (4).

7. The removal system (S) according to the preceding claim, wherein the support surface (4.1) comprises movement means (4.2) configured for moving the bale (F) along said support surface (4.1).

8. The removal system (S) according to any of claims 6 or 7, wherein the cutting means (5) are at least one blade (5.1), arranged on the support surface (4.1), and configured for sectioning at least one cord arranged around the perimeter of the bale (F) into a segment of cord (C).

9. The removal system (S) according to any of claims 6 to 8, further comprising drive means (6), coupled to the structure (4), which allow the bale (F) to be placed on the support surface (4.1).

10. A cutting method for cutting at least one cord (C) each into a segment of cord (C) and removing said segment of cord (C) from the at least one cord (C) by means of a removal system (S) according to any of claims 6 to 9, the method comprising the steps of:
(a) providing a bale (F), comprising at least one cord (C) arranged around the perimeter of the bale (F), on the support surface (4.1),
(b) cutting each cord (C) into a segment of cord (C) by means of the cutting means (5),
(c) collecting the segment of cord (C) of each cord (C) from the bale (F) by means of the securing means (3.3), being said securing means (3.3) in the first open position,
(d) changing the position of the securing means (3.3) from the first open position to the second closed position, and
(e) pivoting the at least one swiveling arm (3) to a predetermined end position.

11. The cutting method according to the preceding claim, wherein the predetermined end position of step (e) is the second position away from the bale (F) of the at least one swiveling arm (3).

12. The cutting method according to any of claims 10 or 11, wherein prior to step (a) the bale (F) comprising at least one cord (C) arranged around the perimeter of the bale (F) is provided on the drive means (6).

13. The cutting method according to any of claims 10 to 12 and claim 5, further comprising the step of:
(f) actuating the actuation means (3.4) for positioning the securing means (3.3) in their first position.

14. The cutting method according to the preceding claim, further comprising the step of:
(g) releasing all the removed segments of cord (C) while the swiveling arm (3) returns to its initial position from its predetermined end position.

15. The cutting method according to any of claims 10 to 14, wherein step (a) further comprises positioning the bale (F) in a specific position on the cutting means (5).
